# EUROPÄISCHE PATENTANMELDUNG

(11) **EP 4 475 366 A1**
(43) Veröffentlichungstag der Anmeldung: **11.12.2024**
(21) Anmeldenummer: 24177046.0
(22) Anmeldetag: 21.05.2024
(51) Int. Cl.: H02G 9/04, B60L 53/31, E01C 11/22, H02G 3/04, H02G 9/06, H02G 9/10

(54) **LADEINFRASTRUKTURSYSTEM**

(30) Priorität: 23.05.2023 DE 102023113433
(71) Anmelder: Hauff-Technik GmbH & Co. KG, 89568 Hermaringen (DE)
(72) Erfinder: KURZ, Ralf, 89537 Giengen (DE)
(74) Vertreter: König Szynka Tilmann von Renesse Patentanwälte Partnerschaft mbB München

(57) **Zusammenfassung**

Die Erfindung betrifft ein Ladeinfrastruktursystem zum Montieren eines Lademoduls für ein elektrisches Fahrzeug. Das Ladeinfrastruktursystem umfasst eine Leitung, welche in einer Leitungsrichtung in einem Boden verläuft, einen darüber angeordneten Sockel, welcher beidseits der Leitung jeweils einen Schenkel und einen quer dazu angeordneten und die Schenkel verbindenden Verbindabschnitt aufweist, welche einen nach unten und in Leitungsrichtung beidseitig offenen Hohlraum bilden, in den die Leitung im montierten Zustand des Ladeinfrastruktursystems aufgenommen ist, und einen auf einer der Leitung abgewandten Oberseite des Sockels angeordneten und mit diesem verbundenen rohrförmigen Hüllkörper, wobei die Schenkel und der quer dazu angeordnete Verbindabschnitt die Leitung an einer den Hohlraum bildenden Unterseite des Sockels in Leitungsrichtung betrachtet U-förmig umschließen.

## Beschreibung

Die vorliegende Erfindung betrifft ein Ladeinfrastruktursystem zum Montieren eines Lademoduls für ein elektrisches Fahrzeug.

Das in Rede stehende Ladeinfrastruktursystem kann bspw. an einer Straße oder insbesondere einem Parkplatz vorgesehen sein, erlaubt also die Montage eines Lademoduls an einem Stellplatz für das Fahrzeug.

Der vorliegenden Erfindung liegt das technische Problem zugrunde, ein vorteilhaftes Ladeinfrastruktursystem anzugeben.

Dies wird erfindungsgemäß mit dem Ladeinfrastruktursystem gemäß Anspruch 1 gelöst. Dieses umfasst eine im Boden verlaufende Leitung, einen Sockel und einen auf dem Sockel angeordneten und mit diesem verbundenen rohrförmigen Hüllkörper. Der Sockel umfasst beidseits der Leitung jeweils einen Schenkel und einen quer dazu verlaufenden Verbindabschnitt, welche miteinander einen nach unten und in Leitungsrichtung beidseitig offenen Hohlraum für eine Aufnahme der Leitung darin bilden; im montierten Zustand umschließen diese die Leitung U-förmig.

Mit dem die Leitung U-förmig umschließenden Sockel und dem darauf angeordneten Hüllkörper wird auf einfache Weise ein stabiles Fundament für ein Lademodul gebildet, das nach dem Verlegen der Leitung im Boden über dieser angeordnet wird. Damit kann zunächst die Leitung verlegt und anschließend ein aus Sockel und Hüllkörper gebildeter Lademodulunterbau über die Leitung in einen Leitungsgraben gestellt bzw. gestülpt werden. Hierdurch kann ein zeitaufwendiges Einfädeln oder Ablängen der Leitung in einen vor deren Verlegen im Graben angeordneten Fundamentkasten entfallen, was insbesondere im Falle mehrerer Leitungen vorteilhaft sein kann.

Zudem lassen sich gegenüber einem allseitig geschlossenen, kastenförmigen Fundament gesonderte Fundamentarbeiten, die bspw. mit Tiefbau- und auch Betonieraufwand einhergehen, reduzieren (oder bevorzugt auch vollständig vermeiden), da der Sockel aufgrund seiner Form stabil im Graben steht und sowohl der Sockel als auch der Hüllkörper nach Auffüllen des Grabens mit Erdreich und einem etwaigen Verdichten stabil von diesem gehalten werden.

Ferner kann der erfindungsgemäße Lademodulunterbau durch die seitlich und nach unten offene Ausgestaltung auch nachträglich über bereits im Boden bestehenden Leitungen angeordnet und von oben mit diesen verbunden werden, was eine Nachrüstung mit zusätzlichen Lademodulen (bspw. im Falle einer Um- oder Hochrüstung bestehender Ladeinfrastrukturen) vereinfachen kann; der Sockel kann also z. B. auf einem bereits verlegten Strang platziert werden.

Bevorzugte Ausgestaltungen finden sich in der gesamten Offenbarung und insbesondere in den abhängigen Ansprüchen, wobei bei der Darstellung der Merkmale nicht immer im Einzelnen zwischen Vorrichtungs- und Verfahrens- bzw. Verwendungskategorien unterschieden wird; jedenfalls implizit ist die Offenbarung hinsichtlich sämtlicher Anspruchskategorien zu lesen. Ferner sollen alle das Ladeinfrastruktursystem betreffenden Angaben zugleich auf ein Ladesystem mit einem solchen und zusätzlich einem Lademodul, sowie auf einen entsprechend ausgestatteten Parkplatz zu lesen sein.

Generell sind "ein" und "eine" im Rahmen dieser Offenbarung als unbestimmte Artikel und damit ohne ausdrücklich gegenteilige Angabe immer auch als "mindestens ein" bzw. "mindestens eine" zu lesen. Es kann also bspw. mehrere Leitungen geben, z. B. in Form eines Strangs zueinander parallel im selben Graben, über denen der Sockel angeordnet ist.

Allgemein sind in der vorliegenden Offenbarung die Angaben "oben" und "unten" bzw. "Ober- und Unterseite" auf eine vertikale Richtung des jeweiligen Elements auf seinen im Boden verbauten Zustand bezogen zu verstehen; demgegenüber sind die Angaben "seitlich" bzw. "an einer Seitenfläche" als auf eine horizontale Richtung des jeweiligen Elements bzw. Körpers bezogen zu verstehen.

Die Leitung wird zur Versorgung eines Lademoduls im Boden verlegt, wofür zunächst der Graben, bspw. mit einem Bagger, ausgehoben und anschließend die Leitung hierin angeordnet wird. Zweckmäßigerweise ist der Graben entlang eines einzelnen Stellplatzes oder gar entlang mehrerer Stellplätze auf einem (bspw. Supermarkt-)Parkplatz gebildet, erstreckt sich also zumindest über eine gewisse Länge vorwiegend geradlinig. Die im Graben verlegte Leitung weist hierbei eine entlang einer Richtung ihrer größten Längserstreckung (im Falle einer rundrohrförmigen Leitung bspw. die entlang deren Mittelachse) genommene Leitungsrichtung auf, welche horizontal liegt.

Die "Leitung" kann dabei als Kabelschutz- bzw. Leerrohr zur späteren Kabelverlegung, als (Erd-)Kabel oder als Rohr mit bereits darin befindlichem Kabel verstanden werden. Dabei kann ein solches Rohr bspw. als Spiral- oder Wellrohr (oder aber bspw. auch als im Wesentlichen mit einer glatten Oberfläche versehenes Rohr) ausgebildet sein.

Gemäß einer bevorzugten Ausführungsform ist die Leitung seitlich zwischen den Schenkeln und oben unterhalb des Verbindabschnitts vollständig aufgenommen, an einer dem Verbindabschnitt gegenüberliegenden Unterseite der Leitung jedoch frei. Vereinfacht gesagt ist die Leitung, horizontal und quer zur Leitungsrichtung gesehen, vollständig von zumindest einem der Schenkel und, von oben gesehen, an ihrer Oberseite vollständig von dem Verbindabschnitt verdeckt. Die Unterseite der Leitung ist demgegenüber bei Betrachtung des Sockels und Vernachlässigung des Erdreichs frei, d.h. diese ist an ihrer Unterseite nicht von dem Sockel verdeckt, sodass der Sockel über eine bereits im Boden verlegte Leitung gestülpt werden kann.

Dabei sind die Schenkel als Standfüße oder Stützen an dem Verbindabschnitt vorgesehen und übertragen an dem Sockelelement und/oder dem Hüllkörper auftretende Kräfte in den darunterliegenden Boden. Diese Standfüße können bspw. als Platte, Rundstab oder Rohr ausgebildet sein. Im Falle des Rundstabs bzw. Rohrs kann der Sockel dann in Leitungsrichtung versetzt bspw. ein weiteres Paar Standfüße aufweisen. Bevorzugt ist eine plattenförmige Ausgestaltung der Standfüße, wobei besonders bevorzugt dann beidseits der Leitung jeweils nur genau ein Schenkel vorgesehen ist. Plattenförmig meint hierbei einen räumlichen Körper, dessen größte räumliche Ausdehnung in einer orthogonal zur Richtung der Materialstärke definierten Ebene liegt; vereinfacht gesagt ist dieser im Wesentlichen (und abgesehen von der Materialstärke) zweidimensional.

Im bevorzugten Fall der Platte weisen die Standfüße eine gewisse, in Leitungsrichtung genommene, Tiefe auf, welche größer als deren Material- bzw. Wandstärke ist. Die plattenförmigen Standfüße können sich in Tiefenrichtung bspw. über mindestens 20 cm, 40 cm oder 60 cm erstrecken, mit möglichen Obergrenzen bei z. B. 2 m, 1,5 m bzw. 1 m. Bevorzugt können die Schenkel und/oder der Verbindabschnitt eine mittlere, d.h. über deren räumliche Erstreckung gemittelte, Materialstärke von höchstens 5 cm, 4 cm, 3 cm, 2 cm oder 1 cm (mit möglichen, davon unabhängigen, Untergrenzen bei z. B. 3 mm, 5 mm bzw. 7 mm) aufweisen. Insgesamt sind die Schenkel und/oder der Verbindabschnitt von gewisser Größe, haben also jeweils oder insgesamt in einer parallel zu ihrer räumlichen Erstreckung gelegenen Ebene eine Oberfläche mit Obergrenzen bei 3 m², 2 m², 1 m² oder 0,5 m² (mit möglichen, davon unabhängigen, Untergrenzen von z. B. 0,1 m², 0,2 m², 0,3 m² oder 0,4 m²).

Auch unabhängig von diesen Größenangaben im Detail können aufgrund der in Leitungsrichtung offenen Ausgestaltung des Sockels bspw. dessen in Leitungsrichtung weisende Öffnungen zumindest größer als etwaige Öffnungen quer zur Leitungsrichtung sein. Etwa im Falle der Plattenform kann der Sockel quer zur Leitungsrichtung auch vollständig geschlossen sein.

Die Schenkel und der Verbindabschnitt können bspw. monolithisch miteinander ausgebildet sein, also aus demselben durchgehenden Material geformt. Alternativ können sie jedoch auch mehrteilig zueinander sein, sind bzw. werden sie also zusammengesetzt. In anderen Worten sind die Schenkel an den Verbindabschnitt angesetzt, wodurch auch eine Kombination unterschiedlicher Materialen möglich ist. Dabei können sie entweder einstückig zusammengesetzt sein (nicht zerstörungsfrei auftrennbar, bspw. verschweißt) oder auch lösbar miteinander verbunden sein (bspw. gesteckt und/oder verschraubt). Als Material für die Schenkel und/oder den Verbindabschnitt kommt zum einen bspw. Metall oder Beton (mit Zement als Bindemittel) in Betracht.

Gemäß einer bevorzugten Ausführungsform sind die Schenkel und/oder ist der Verbindabschnitt jedoch aus einem Sockelmaterial mit Kunststoff hergestellt. Unter einem Material mit Kunststoff wird ein Material verstanden, bei dem der Kunststoff zumindest als Bindemittel dient bzw. eine Matrix bildet, in welche ein Füllstoff eingebettet ist, bspw. auf Grundlage eines mineralischen Rohstoffs (z. B. Quarz, Basalt bzw. Granit). Der Anteil an Kunststoff kann dann auch im Verhältnis klein sein, bspw. in einem Bereich zwischen 5 Gew.-% und 15 Gew.-% liegen.

Bevorzugt ist das Material mit Kunststoff ein Polymerbeton, also eine Kunststoffmatrix mit Beton als Füllstoff. Die Schenkel und/oder der Verbindabschnitt aus einem Sockelmaterial mit Kunststoff, insbesondere Polymerbeton, können vergleichsweise leicht und dennoch ausreichend stabil sein, um die vorgenannten Kräfte zuverlässig in den Boden einzuleiten. Zudem ist das Material mit Kunststoff schlag- und witterungsbeständig, sodass Beschädigungen auf der Baustelle oder im verbauten Zustand vermieden werden können.

Alternativ bevorzugt kann es sich bei dem Material mit Kunststoff auch um einen Hartkunststoff, bspw. PA, PE oder PC handeln. Der "Hartkunststoff" kann bspw. eine Shore-Härte (D) von mindestens 50 Shore, 55 Shore, 60 Shore, 65 Shore bzw. 70 Shore haben, wobei mögliche Obergrenzen bspw. bei höchstens 90 Shore bzw. 85 Shore liegen können. Dieser Hartkunststoff ist ebenfalls schlag- und witterungsbeständig und weist, bspw. gegenüber Polymerbeton, eine geringere Dichte und demnach ein geringeres Gewicht auf, was insbesondere hinsichtlich der Montage auf der Baustelle (bspw. beim Platzieren des Sockels im Graben) von Vorteil sein kann.

Gemäß einer bevorzugten Ausführungsform sind in dem Hohlraum mindestens zwei nebeneinander und zumindest in diesem parallel zueinander verlaufende Leitungen aufgenommen. Weitere Untergrenzen können bspw. bei mindestens 3, 5, 7 oder 8 liegen, Obergrenzen z. B. bei höchstens 100, 80, 60, 40 oder 20. Dies ermöglicht es, mehrere Leitungen durch den Hohlraum des Sockels zu führen und für die Versorgung, bspw. mit elektrischer Energie, leitungsabwärts gelegener Lademodule jeweils eine eigene Leitung zu verwenden.

Besonders bevorzugt verläuft zumindest eine der mehreren Leitungen ohne Unterbrechung, d.h. ohne einen leitungsseitigen Anschluss, durch den Sockel, sodass ein leitungsabwärts gelegenes Lademodul ohne leistungsreduzierende Leitungsunterbrechung mit elektrischer Energie versorgt werden kann. Dies ist insbesondere beim (DC- oder HPC-)Schnellladen von Elektrofahrzeugen, welches trotz einer Verwendung von Spannungen größer 300 V erhebliche Stromstärken von bspw. größer 30 A erfordert, von Vorteil, da ein jeweiliges Lademodul leitungsaufwärts direkt an einem zentralen Energieübergabepunkt (bspw. einen separaten Anschluss an das Nieder- oder Mittelspannungsnetz eines örtlichen Energieversorgers) angeschlossen werden kann und die leitungsabwärts zur Verfügung stehende Leistung nicht durch (im Sinne einer Reihenschaltung) vorgeordnete Lademodule reduziert wird.

Gemäß einer bevorzugten Ausführungsform sind entlang eines Strangs mit einer Mehrzahl Leitungen (vgl. vorletzter Absatz) eine Mehrzahl Sockel angeordnet, die jeweils einen Hüllkörper tragen. Hierbei meint "Mehrzahl" mindestens 2, bevorzugt können mindestens 3, 5 oder 8 sein (mit möglichen Obergrenzen bei z. B. 200, 100 oder 50). Die Mehrzahl Sockel und/oder Hüllkörper können jeweils untereinander bevorzugt baugleich sein.

Gemäß einer bevorzugten Ausführungsform ist eine vertikale Höhe eines aus dem Sockel und dem rohrförmigen Hüllkörper gebildeten Lademodulunterbaus einstellbar (offenbart sein soll ausdrücklich auch ein Verfahren / eine Verwendung, bei welchem/welcher die Höhe des Lademodulunterbaus eingestellt wird). Dazu kann bspw. der Sockel in sich höhenverstellbar sein, z. B. aus mehrteiligen Schenkeln mit zueinander einstellbaren Schenkelteilen bestehen. Zusätzlich oder alternativ kann die vertikale (Gesamt-)Höhe des Lademodulunterbaus auch durch eine Anpassung einer Position des rohrförmigen Hüllkörpers relativ zu dem Sockel verändert und bspw. an unterschiedliche Grabentiefen oder Oberflächenbeschaffenheiten angepasst werden. Diese Anpassbarkeit erleichtert die Montage des Ladeinfrastruktursystems, da ein zeitaufwendiges Nivellieren des Grabenbodens entfallen und bevorzugt auch nach dem Aufstellen des Lademodulunterbaus Anpassungen an etwaige Oberflächenunebenheiten erfolgen können.

Generell erstreckt sich der Hüllkörper innerhalb der fertigen Schichtaufbauhöhe des Bodens, bspw. des Stell- oder Parkplatzes oder Rand- bzw. Grünstreifens daneben, bis zu dem über den Leitungen angeordneten Sockel nach unten. Im fertig montierten Zustand liegt das Erdreich, also Bodenmaterial (z. B. Schüttgut, wie Kies und Erde, oder z. B. auch abschnittsweise angegossener Beton), bspw. an einer Außenwandfläche des Hüllkörpers an. Für einen stabilen Halt im Erdreich kann sich der Hüllkörper bspw. mindestens 30 cm, 50 cm, 70 cm bzw. 100 cm im Erdreich nach unten erstrecken (genommen von einer Oberkante des fertigen Bodenaufbaus), mit möglichen Obergrenzen bei z. B. höchstens 1,7 m, 1,5 m bzw. 1 m. Je nach Anwendungsfall kann dabei Schüttgut, z. B. Kies oder Erde (im Grünstreifen), oder auch ein Platten- bzw. Asphaltbelag die Oberkante des Bodenaufbaus bilden.

Der Sockel, also bspw. eine Oberkante des Verbindabschnitts, kann bspw. um mindestens 30 cm, 50 cm, 70 cm bzw. 100 cm im Erdreich gegenüber einer Oberkante des fertigen Bodenaufbaus (vgl. vorstehenden Absatz) nach unten versetzt sein, mit möglichen Obergrenzen bei z. B. höchstens 1,7 m, 1,5 m bzw. 1 m.

Der Hüllkörper ist rohrförmig, also als länglicher Hohlkörper, vorzugsweise mit einer Öffnung an seiner Ober- und Unterseite, ausgestaltet. Um eine Durchführung des Kabels von der darunterliegenden Leitung zum darüberliegenden Lademodul zu erleichtern, hat der Hüllkörper hierbei einen Innendurchmesser von mindestens 15 cm, 20 cm, 25 cm bzw. 30 cm, wobei mögliche Obergrenzen (davon unabhängig) bspw. bei höchstens 60 cm, 50 cm, 40 cm bzw. 35 cm liegen können.

In bevorzugter Ausgestaltung ist der Hüllkörper im Bereich eines unteren Abschnitts formschlüssig mit dem Sockel verbunden, stehen also der untere Abschnitt des Hüllkörpers und der Sockel in formschlüssigem Eingriff miteinander. Gegenüber einer unlösbaren/einstückigen Ausgestaltung ermöglicht diese formschlüssige Verbindung die vorgenannte Höhenverstellbarkeit der beiden Komponenten zueinander und verbessert zudem deren Herstellbarkeit, da jede Komponente einzeln mit einem für diese optimalen Fertigungsverfahren hergestellt werden kann. Ferner kann der baugleiche Hüllkörper in einer alternativen Anwendungssituation auch ohne Sockel verwendet werden.

Gemäß einer bevorzugten Ausführungsform weist der rohrförmige Hüllkörper an einer Außenmantelfläche eine Mehrzahl jeweils umlaufender Erhebungen auf (mit dementsprechenden Vertiefungen dazwischen). Diese erstrecken sich jeweils um die Rohrachse zumindest abschnittsweise, bevorzugt vollständig, umlaufend, besonders bevorzugt je Erhebung in sich geschlossen. Denkbar sind jedoch auch (relativ zur Hochachse) spiralförmige Erhebungen, welche an der Außenmantelfläche des Hüllkörpers verlaufen und, in Kombination mit einer in diesem Fall bevorzugten Rundrohrform des Hüllkörpers, bspw. ein leicht herzustellendes Außengewinde für einen Eingriff mit dem Sockel (siehe auch nachfolgend) bilden können. Hierdurch wird es bspw. möglich, durch Drehen des Hüllkörpers um seine Hochachse eine Bewegung relativ zum Verbindabschnitt zu erreichen, und hierdurch insbesondere die vertikale Höhe des Lademodulunterbaus ohne großen Aufwand einzustellen.

Axial aufeinanderfolgend sind mehrere Erhebungen vorgesehen, bspw. mindestens 4, 6, 8 oder 10 Erhebungen (mit möglichen Obergrenzen bei z. B. höchstens 100, 80, 60, 40 bzw. 30 Erhebungen). Die Erhebungen sind bevorzugt in axialer Richtung äquidistant und/oder mit radial gleicher Höhe vorgesehen. Im Allgemeinen kann die der Rohrachse zugewandte Innenmantelfläche der mit Erhebungen geformten Kontur folgen (also ebenfalls mit Erhebungen/Vertiefungen geformt sein), bevorzugt ist sie jedoch glatt ausgebildet, also in einem Axialschnitt betrachtet geradlinig. Ein solcher Hüllkörper kann bspw. in Form eines Ripprohres vorgesehen sein, das aufgrund der außenseitigen Rippen stabil und zugleich verhältnismäßig leicht ist. Alternativ lässt sich der außenseitig mit Erhebungen/Vertiefungen und innenseitig glatt vorgesehene Hüllkörper aber bspw. auch in Form eines Verbundwellrohres vorsehen, was bspw. eine innenseitige Einführung von elektrischen Kabeln erleichtern kann, da deren Durchführung im Hüllkörper nicht von den innenseitigen Erhebungen/Vertiefungen erschwert wird.

Gemäß einer bevorzugten Ausführungsform ist der Hüllkörper in eine Aussparung des Verbindabschnitts eingesetzt und es greift der Verbindabschnitt in eine zwischen zwei benachbarten Erhebungen gelegenen Vertiefung formschlüssig ein. Durch die Anordnung des Hüllkörpers in der Aussparung des Verbindabschnitts wird ein Durchgang zwischen dem durch den Sockel gebildeten Hohl- und dem Innenraum des Hüllkörpers gebildet, durch welchen ein aus der Leitung kommendes Kabel in den Innenraum und somit zum Lademodul geführt werden kann. Zudem wird durch den Eingriff des Verbindabschnitts in die Vertiefung eine stabile Verbindung zwischen diesen hergestellt, welche dennoch deren gewünschte Relativerstellbarkeit zulässt.

Gemäß einer alternativ bevorzugten Ausführungsform greift der Verbindabschnitt über ein separat von diesem gebildetes und mit diesem verbundenes Eingreifelement formschlüssig in die Vertiefung ein, was die Herstellbarkeit von Verbindabschnitt und Eingreifelement hinsichtlich Materialwahl und Fertigungsprozess verbessert und eine nachträgliche Anpassung ihrer Relativposition erleichtert.

Gemäß einer alternativ bevorzugten Ausführungsform ist der Hüllkörper in eine Aussparung des Verbindabschnitts eingesetzt und durch ein in eine zwischen zwei benachbarten Erhebungen gelegene Vertiefung des Hüllkörpers eingesetztes Halteelement bezogen auf eine vertikale Richtung gegen Durchrutschen nach unten gesichert. Vereinfacht gesagt wird also der Hüllkörper durch das in die Vertiefung eingesetzte Halteelement vertikal abgestützt. Als Haltelement kann hierbei bspw. ein in die Vertiefung des Hüllkörpers eingesetzter und sich radial nach außen erstreckender Keil dienen, der den Hüllkörper gegen den Verbindabschnitt abstützt. Bevorzugt ist das Haltelement jedoch ein band- bzw. ringförmiges Elastomerteil (bspw. aus einem Elastomermaterial), das unter Nutzung seiner elastischen Verformbarkeit gedehnt und derart in eine Vertiefung eingelegt wird, dass zumindest ein gewisser Teil radial über die nächstbenachbarten Erhebungen hervorsteht und der Hüllkörper durch diesen überstehenden Teil gegen Durchrutschen nach unten gesichert wird.

Dieses Elastomermaterial ist ganz allgemein ein Kunststoff mit elastischem Verhalten. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer.

Gemäß einer bevorzugten Ausführungsform weist der Hüllkörper an einem oberen Abschnitt einen monolithisch mit diesem gebildeten Flansch auf, welcher in Bezug auf eine Hochachse des Hüllkörpers radial nach außen und/oder innen über diesen herausragt und zum Montieren des Lademoduls vorgesehen ist. Der Flansch hat eine in vertikaler Richtung genommene Dicke von mindestens 1 cm, in der Reihenfolge der Nennung zunehmend bevorzugt mindestens 2 cm, 3 cm bzw. 5 cm. Mögliche Obergrenzen können bspw. bei höchstens 20 cm, 15 cm bzw. 12 cm liegen. Dieser Flansch erlaubt die Montage des Lademoduls ohne weitere Elemente, sodass einfach eine stabile Verbindung zwischen diesen hergestellt werden kann.

Gemäß einer alternativ bevorzugten Ausführungsform umfasst das Ladeinfrastruktursystem ferner einen Montageträger, welcher an einem oberen Abschnitt des Hüllkörpers angeordnet ist. Der separat ausgebildete Montageträger ragt in Bezug auf eine Hochachse des Hüllkörpers radial nach außen und/oder innen über diesen heraus und ist (als Alternative zu oder ggf. auch in Kombination mit dem zuvor beschriebenen Flansch) zum Montieren des Lademoduls vorgesehen. Generell kann der Montageträger den Innenraum des Hüllkörpers nach oben abdecken, etwa von einem Durchlass für Kabel etc. abgesehen. Ein solcher Durchlass kann vorkonfektioniert, also bereits werksseitig vorgesehen sein, er kann aber andererseits auch erst vor Ort eingebracht werden. Im Falle der Vorkonfektionierung kann bspw. ein Stopfen, z. B. aus einem Elastomermaterial, den Durchlass verschlie-ßen, bis dieser zur Verlegung des Kabels genutzt wird.

In bevorzugter Ausgestaltung ist der obere Abschnitt des außenseitig mit Erhebungen vorgesehenen Hüllkörpers, insbesondere das Ripp- oder Verbundwellrohr, in den Montageträger eingeformt. Dabei ist in dem eingeformten Abschnitt zumindest eine Erhebung (bspw. Rippe) angeordnet, die entsprechend formschlüssig in einem Montageträgermaterial gehalten wird, also mit einem Hinterschnitt. Hierbei ist ein gut gießbares und dennoch vor Ort (d.h. auf der Baustelle) bearbeitbares Montageträgermaterial (bspw. Polymerbeton) von Vorteil, insbesondere hinsichtlich einer etwaigen Einbringung von Bohrungen zur Montage des Lademoduls daran.

Die Erfindung betritt ferner ein Verfahren zur Montage eines Lademoduls für ein elektrisches Fahrzeug in einem Ladeinfrastruktursystem. Bei diesem wird zunächst zumindest eine Leitung in einem im Boden verlaufenden Graben verlegt und anschließend darüber ein nach unten und in Leitungsrichtung beidseitig offener Sockel derart über die im Boden verlegte Leitung gesetzt, dass die die Leitung dann in einem durch den Sockel gebildeten Hohlraum aufgenommen ist. Bevorzugt nach dem Anordnen des Sockels über der Leitung wird auf dem Sockel ein Hüllkörper derart angeordnet. Dieser kann mit dem Hüllkörper verbunden werden, dass der Sockel den Hüllkörper bezogen auf eine vertikale Richtung stützt.

Optional kann nach dem Anordnen des Hüllkörpers auf dem Sockel noch eine relative Höhenverstellung zwischen diesen erfolgen, wodurch bspw. ein Ausgleich von Unebenheiten auf einem Boden des Grabens (d.h. unterhalb des Sockels), von einer entlang des Grabens ungleichmäßigen Tiefe oder einer oberseitig (d.h. im Bereich eines an dem dem Sockel gegenüberliegenden oberen Ende des Hüllkörpers) vorliegenden Unebenheit erreicht werden kann.

Nach der Anordnung des Hüllkörpers sowie bevorzugt nach einer etwaigen Höhenanpassung wird aus der unter dem Sockel liegenden Leitung ein darin verlaufendes Kabel, alternativ auch die Leitung selbst, nach oben in einen Innenraum des Hüllkörpers und anschließend bis zu dessen oberem Ende gezogen, sodass daran ein elektrischer Anschluss des Lademoduls vorbereitet werden oder bereits erfolgen kann. Der Sockel mit dem daran montierten Hüllkörper wird anschließend mit Erdreich (bevorzugt dem zuvor entnommenen) hinterfüllt und verdichtet, sodass der aus diesen gebildete Lademodulunterbau stabil im verdichteten Erdreich aufgenommen ist (dies wird auch als "montierter Zustand" bezeichnet). Am oberen, bevorzugt als Flansch ausgebildeten, Abschnitt des Hüllköpers wird nach dem Hinterfüllen ein Lademodul montiert und über die darunterliegende Leitung mit Energie, bevorzugt elektrischer, versorgt.

Die Erfindung betrifft ferner eine Verwendung eines Lademodulunterbaus oder mehrerer Lademodulunterbauten und/oder eines Lademoduls oder mehrerer Lademodule in einem Ladeinfrastruktursystem nach einem der vorstehenden Aspekte, insbesondere an einem Parkplatz.

Im Folgenden wird ein alternatives Ladeinfrastruktursystem beschrieben, das auf einen in den Boden eingebauten Bordstein als Fundamt zurückgreift.

Der vorliegenden Erfindung liegt das technische Problem zugrunde, ein vorteilhaftes Ladeinfrastruktursystem anzugeben.

Dies wird erfindungsgemäß mit dem Ladeinfrastruktursystem gemäß Anspruch 1 gelöst. Dieses umfasst einen Installationsträger zum Montieren des Lademoduls, wobei dieser Installationsträger an einem in den Boden eingebauten Bordstein befestigt ist. Mit dem Bordstein wird ein im Straßenbau bereits eingesetztes und damit in der bereits bestehenden oder auch im Ausbau befindlichen Infrastruktur verfügbares Bauteil als Fundament für die Installation des Lademoduls genutzt. Damit lassen sich bspw. gesonderte Fundamentarbeiten, die bspw. mit Tiefbau- und auch Betonieraufwand einhergehen, reduzieren oder auch vollständig vermeiden. Vereinfacht zusammengefasst wird durch die Befestigung des Installationsträgers am Bordstein dessen bestehende Verankerung im Boden als Fundament für das Lademodul genutzt.

Bevorzugte Ausgestaltungen finden sich in der gesamten Offenbarung und insbesondere in den abhängigen Ansprüchen, wobei bei der Darstellung der Merkmale nicht immer im Einzelnen zwischen Vorrichtungs- und Verfahrens- bzw. Verwendungskategorien unterschieden wird; jedenfalls implizit ist die Offenbarung hinsichtlich sämtlicher Anspruchskategorien zu lesen. Ferner sollen alle das Ladeinfrastruktursystem betreffenden Angaben zugleich auf ein Ladesystem mit einem solchen und zusätzlich einem Lademodul, sowie auf einen entsprechend ausgestatteten Parkplatz zu lesen sein.

Der Bordstein, auch als Randstein bezeichnet, ist in den Boden eingebaut, insbesondere in ein Betonbett gesetzt. Ein unterer Abschnitt des Bordsteins wird also von einem Betonsockel eingefasst, dieser kann seinerseits bspw. auf einem Schotterbett sitzen. Das Eingefasst-sein meint bspw., dass der Bordstein mit seiner Unterseite und/oder zumindest einer Seitenwand, vorzugsweise beiden Seitenwänden, an dem erstarrten Beton anliegt. Dabei bleibt bevorzugt ein oberer Abschnitt der Seitenwände frei von Beton, was bevorzugt zur Befestigung eines Installationsträgers genutzt werden kann, siehe unten im Detail.

Generell beziehen sich im Rahmen der vorliegenden Offenbarung die Angaben "oben" und "unten" bzw. "Ober- und Unterseite" auf die vertikale Richtung, wohingegen die "Seitenwände" des Bordsteins dessen in horizontaler Richtung weisende Längsseiten sind. Diese Seitenwände liegen in einer horizontal orientierten Querrichtung des Bordsteins einander entgegengesetzt. In einer zur Querrichtung des Bordsteins senkrechten, ebenfalls horizontal orientierten Längsrichtung hat der Bordstein seine Längserstreckung. In der Längsrichtung kann der Bordstein insbesondere mit weiteren Bordsteinen aneinandergesetzt sein und so eine Randeinfassung bilden, die bspw. zwei Flächen voneinander abgegrenzt (in Querrichtung), etwa einen oder mehrere Stellplätze von einem Abstands- bzw. Grünstreifen.

Der Bordstein kann bspw. eine in Querrichtung genommene Breite von mindestens 8 cm, vorzugsweise mindestens 10 cm, 12 cm oder 15 cm haben, wobei mögliche Obergrenzen bspw. bei höchstens 24 cm, 22 cm, 20 cm bzw. 18 cm liegen können. Die vertikal zwischen Ober- und Unterseite genommene Höhe kann bspw. mindestens 20 cm bzw. 25 cm betragen, mit möglichen Obergrenzen bei bspw. höchstens 35 cm bzw. 30 cm. In Längsrichtung kann der Bordstein eine Länge von mindestens 30 cm, 50 cm bzw. 70 cm haben (mit möglichen Obergrenzen bei bspw. 2 m bzw. 1,5 m), wobei typische Längen bei 50 cm und 100 cm liegen. Auch unabhängig von den Abmessungen im Einzelnen kann der Bordstein insbesondere aus Beton vorgesehen sein, im Allgemeinen aber bspw. auch aus Naturstein, etwa Granit, oder auch aus einem Kunststoff. Auch unabhängig vom Material im Einzelnen ist der Bordstein bevorzugt ein Vollkörper.

Die dem Stellplatz zugewandte Seitenfläche des Bordsteins wird auch als Vorderfläche bezeichnet, in Querrichtung entgegengesetzt liegt entsprechend die Rückfläche. Insbesondere an der Vorderfläche kann an der oberen Kante auch eine Anschrägung bzw. Verrundung vorgesehen sein, die auch als Anlauffläche bezeichnet wird (und vorliegend als Teil der Vorderfläche betrachtet wird). Von der Vorderfläche bleibt im fertig eingebauten Zustand ein oberer Abschnitt frei, der bspw. die Begrenzung des Stellplatzes markiert. An diese Seitenwand des Bordsteins grenzt dann typischerweise in einem vertikal mittleren Abschnitt der Fahrbahnbelag, etwa Pflastersteine oder Asphalt, und ein oberer Abschnitt davon steht als Begrenzung hervor. Die Rückfläche kann hingegen z. B. vollständig von Bodenmaterial bedeckt sein, in einem unteren Abschnitt also Beton und darüber mit Schüttgut.

Gemäß einer bevorzugten Ausführungsform erstreckt sich ein Befestigungsabschnitt des Installationsträgers oberseitig des Bordsteins und an zumindest einer von dessen Seitenwänden, also an der Vorder- und/oder Rückfläche. Je nach Art der Befestigung kann der Befestigungsabschnitt an der Oberseite und der oder den Seitenwänden anliegen (etwa im Falle einer Verschraubung oder -nietung) oder über bspw. einen Montagekleber einen Spalt beabstandet sein. Die Montage oberseitig des Bordsteins kann eine gute Stabilität schaffen, auch wenn der Installationsträger im Allgemeinen bspw. auch in Form eines Winkels nur an der Rückfläche montiert werden könnte.

Gemäß einer bevorzugten Ausführungsform weist der Befestigungsabschnitt einen ersten (vorderen) und einen zweiten (hinteren) Schenkel auf, wobei der Bordstein in Querrichtung zwischen diesen Schenkeln eingefasst ist. Der Befestigungsabschnitt kann also in Form einer Klammer vorgesehen sein, die von oben auf den Bordstein aufgesetzt ist. Im Allgemeinen kann der Bordstein bspw. auch nur eingeklemmt sein, kann der Installationsträger also kraftschlüssig befestigt sein.

Die Befestigung des Installationsträgers am Bordstein ist jedoch bevorzugt ein Verschrauben und/oder Verkleben, bspw. mit einem Verbundmörtel oder Steinkleber. In dieser Hinsicht kann der klammerförmige Befestigungsabschnitt bspw. eine große Kontaktfläche und damit gute Stabilität schaffen. Bei der alternativen oder zusätzlichen Verschraubung kann bspw. eine Schraube oder eine Gewindestange sowohl den Bordstein als auch den vorderen und hinteren Schenkel durchsetzen und können diese bspw. durch Anziehen einer oder mehrerer Muttern verspannt werden. Im Allgemeinen könnte der Befestigungsabschnitt aber auch von oben (vertikal) festgeschraubt werden; generell wird ein entsprechendes Loch bevorzugt vor Ort in den Bordstein gebohrt (Nachrüsten).

Gemäß einer bevorzugten Ausführungsform ist ein Montageabschnitt des Installationsträgers, auf dem das Lademodul montiert wird oder ist, seitlich zum Bordstein versetzt. Bereits vor der Montage des Lademoduls kann der Montageabschnitt dafür vorkonfektioniert sein, also bspw. mit Befestigungsmitteln ausgestattet sein (etwa Gewindestiften, eingeschnitten Gewinden und/oder aufgeschweißten Muttern bzw. Stegen zum formschlüssigen Hintergreifen, oder auch einem Rohrstutzen bzw. -stück, s. u. im Detail). Mit dem bevorzugt rückseitigen Versetzen des Montageabschnitts, also von der Stellfläche weg, kann einerseits die Stabilität des Bordsteins zur Befestigung genutzt, aber andererseits ein gewisser Sicherheitsabstand von der Fahrbahn bzw. Stellfläche gewahrt werden. Das Lademodul kann bspw. in einem horizontalen Abstand von mindestens 20 cm bzw. 30 cm vom Bordstein montiert sein (genommen als kleinster Abstand zwischen Rückfläche und Lademodul), wobei mögliche Obergrenzen, z. B. bei höchstens 2 m bzw. 1 m liegen können (vgl. auch die nachstehenden Varianten mit zweiter Randeinfassung).

Gemäß einer bevorzugten Ausführungsform weist der Installationsträger eine Abdeckplatte auf, die sich durchgehend über den Befestigungs- und den Montageabschnitt erstreckt. Wenngleich im Allgemeinen auch eine Kunststoffplatte denkbar ist, ist eine Metallplatte bevorzugt. Im Befestigungsabschnitt können unterseitig an der Abdeckplatte die vorstehend diskutierten Schenkel vorgesehen sein, etwa im Falle der Metallplatte der hintere Schenkel angeschweißt und der vordere Schenkel durch Umbiegen der Platte erzeugt oder ebenfalls angeschweißt. Bevorzugt hat die Platte, insbesondere Metallplatte, eine plane Oberfläche, was bspw. auch in Reinigungshinsicht von Vorteil sein kann. Alternativ zu Metall kann der Installationsträger z. B. aus Kunststoff vorgesehen werden, etwa einem faserverstärkten Kunststoff.

Gemäß einer bevorzugten Ausführungsform ist auf dem Installationsträger, bevorzugt im Befestigungsabschnitt, also über dem Bordstein, ein Rammschutz vorgesehen. Dieser ist somit zwischen dem Stellplatz und dem Lademodul positioniert und kann zumindest eine gewisse "Warnfunktion" bei einem Rempler haben. Im Allgemeinen kann auch ein Bügel als Rammschutz vorgesehen sein, bevorzugt ist ein Poller. Dieser kann sich bspw. vergleichsweise einfach aufschrauben und austauschen lassen.

Im Allgemeinen kann bspw. ein Erdkabel für den Anschluss des Lademoduls auch direkt im Boden verlegt werden, etwa rückseitig des Bordsteins im Grünstreifen. In bevorzugter Ausgestaltung umfasst das Ladeinfrastruktursystem jedoch einen Kabelkanal, der insbesondere in Längsrichtung verlaufen kann, z. B. im Wesentlichen parallel zur Randeinfassung. Den Kabelkanal kann einerseits ein Kabelschutzrohr bilden, bspw. ein Spiral- oder Wellrohr. Alternativ kann aber auch eine Kabelrinne den Kabelkanal bilden, die im Unterschied zu dem Kabelschutzrohr, das umlaufend in sich geschlossen ist, nach vertikal oben mit einem abnehmbaren Deckel verschlossen wird. Die Kabelrinne kann in einem achssenkrechten Schnitt bspw. eine U-Form haben, diese wird dann von dem Deckel nach oben geschlossen.

Der Kabelkanal kann rückseitig, im Allgemeinen aber auch vorderseitig des Bordsteins montiert werden bzw. sein. Insbesondere eine Kabelrinne, die bspw. formstabil und aufgrund des im Wesentlichen rechteckigen Querschnitts auch gut auf einer Fläche positionierbar ist, lässt sich auch vor dem Bordstein positionieren, also auf dem Stellplatz.

Generell deckt in bevorzugter Ausgestaltung ein Abschnitt des Installationsträgers den Kabelkanal nach oben ab, kann der Installationsträger also zugleich als Niederhalter für den Kabelkanal dienen. Dies kann wiederum den Einbau vereinfachen, bspw. auch ohne übermäßig tiefe Verlegung oder Fundamentierung einem Auffrieren vorbeugen. Bevorzugt liegt der Abschnitt des Installationsträgers direkt an dem Kabelschutzrohr oder insbesondere der Kabelrinne an. Im Falle eines rückseitig des Bordsteins in den Boden eingebauten Kabelkanals kann das entsprechende Kabelschutzrohr oder insbesondere die Kabelrinne auch bodenbündig eingebaut werden, also von oben zugänglich in der Oberkante des Bodenaufbaus liegen.

In bevorzugter Ausgestaltung ist der Kabelkanal rückseitig des Bordsteins vorgesehen und dient der zur Montage des Lademoduls vorgesehene Montageabschnitt zugleich als Niederhalter. Damit lassen sich Funktionen integrieren, ferner kann der Montageabschnitt auch zur Kabelzufuhr zu dem Lademodul genutzt werden. Dazu ist der Montageabschnitt bevorzugt mit einem Loch versehen, durch welches ein im Kabelkanal verlegtes Kabel hoch zum Lademodul geführt wird oder ist. Im Falle der Rinne kann der Montageabschnitt entweder auf einen Deckel gesetzt sein, der nach der Montage des Installationsträgers und des Lademoduls auf der Rinne verbleibt. Alternativ kann der Montageabschnitt auch zwischen zwei Deckeln direkt auf der Rinne sitzen.

Gemäß einer bevorzugten Ausführungsform, welche das Kabelschutzrohr betrifft, ist am Montageabschnitt des Installationsträgers ein nach unten hervortretender Rohrstutzen vorgesehen, an den das Kabelschutzrohr angesetzt wird bzw. ist. Dazu kann es über eine gesonderte Muffe mit dem Rohrstutzen verbunden oder auf diesen auf- oder in ihn eingeschoben sein. Der Rohrstutzen kann im Falle eines Kunststoffteils monolithisch mit dem übrigen Installationsträger geformt oder bei einem Metallteil bspw. angeschweißt sein. Der Rohrstutzen kann sich vertikal nach unten erstrecken oder auch zur Vertikalen verkippt sein, etwa um eine gewisse Kabelführung aus der Horizontalen in die Vertikale abzubilden.

Gemäß einer bevorzugten Ausführungsform umfasst das Ladeinfrastruktursystem auch einen von oben zugänglichen Kabelschacht. In diesen kann die Kabelrinne und/oder können mehrere Kabelschutzrohre münden. Der Zugangsschacht kann bspw. mit einem Deckel verschlossen sein und als zentraler Sammel- bzw. Zugangspunkt für den Anschluss mehrerer Ladestationen dienen. Der Schacht kann sich bspw. tiefer erstrecken als der Kabelkanal, sein unteres Ende kann also tiefer im Boden liegen als z. B. die Bodenwand der Kabelrinne. In dem Schacht kann bspw. eine Verteilung erfolgen, kann also bspw. ein eingehender Kabelstrang auf mehrere Kabelkanäle verteilt werden.

Alternativ oder zusätzlich ist selbstverständlich auch eine oberirdische Verteilung möglich, kann das Ladeinfrastruktursystem also bspw. einen Kabelverteilerschrank aufweisen. Zu diesem kann das bzw. können die Kabel im Boden hin verlaufen, typischerweise treten sie dann über einen im Boden verankerten Sockelabschnitt des Kabelverteilerschranks in diesen ein. Wird bspw. eine Kabelrinne genutzt, kann sich diese z. B. bis zu dem Kabelverteilerschrank hin erstrecken und vor diesem enden (stumpf anstehen), wobei das bzw. die Kabel dann durch den Sockelabschnitt des Schranks in dessen Innenraum verlaufen. Generell kann ein oberirdischer Abschnitt des Innenraums des Kabelverteilerschranks bspw. über eine Tür zugänglich sein, die bspw. zu Verlegezwecken geöffnet wird.

Wenngleich eine Kabelverlegung in Schutzrohr oder Rinne Vorteile haben kann (siehe vorne), ist sie im Allgemeinen nicht zwingend. Spezielle Erdkabel, bspw. NYY-J 5x6 mm² o.ä., lassen sich bspw. auch direkt im Boden verlegen, was bei großen zu erschließenden Flächen auch ökonomische Vorteile haben kann. In Abhängigkeit von den Begebenheiten kann die Kabelverlegung direkt im Boden auch platzsparend sein.

In bevorzugter Ausgestaltung weist das Ladeinfrastruktursystem zusätzlich zu dem bisher diskutierten (ersten) Installationsträger einen weiteren (zweiten) Installationsträger auf, der entlang der Längsrichtung versetzt einem weiteren Stellplatz zugeordnet montiert ist. Sämtliche bezüglich des "ersten" Installationsträgers offenbarten Merkmale können einzeln oder in Kombination auch im Falle des zweiten Installationsträgers bzw. sämtlicher Installationsträger des Ladeinfrastruktursystems bevorzugt sein; vorzugsweise sind der erste und zweite Installationsträger, insbesondere sämtliche Installationsträger des Infrastruktursystems, zueinander baugleich. Insgesamt kann sich in Längsrichtung eine mit den Bordsteinen gebildete Randeinfassung erstrecken, wobei an dieser Randeinfassung mindestens 2 insbesondere aber auch mindestens 3, 4, 5, 6, 7 oder 8 Installationsträger befestigt sein können (mögliche Obergrenzen hängen auch von der Parkplatzgrö-ße ab, exemplarisch seien 100 oder 50 genannt).

Ein Vorteil des aufgrund des Rückgriffs auf die bestehende Fundamentierung vereinfachten Einbaus und verringerten Kostenaufwands kann auch darin liegen, dass bei der Erschließung des Parkplatzes sich dieser dann im Wesentlichen flächendeckend mit Installationsträgern ausstatten lässt, wobei noch nicht alle mit Lademodulen versehen werden müssen. Unabhängig von diesen Details können die in Längsrichtung an derselben Randeinfassung nebeneinandergesetzten Installationsträger bzw. Lademodule dann über eine gemeinsame, in Längsrichtung durchgehende Kabelrinne oder über jeweils ein eigenes Kabelschutzrohr angebunden sein. Letztere können bspw. in einem Zugangsschacht zusammenlaufen, siehe vorne.

Bei einer bevorzugten Ausführungsform gibt es zusätzlich zu der bisher diskutierten (ersten) Randeinfassung eine weitere (zweite) Randeinfassung, die gemeinsam mit der ersten Randeinfassung in Querrichtung eine Zwischenfläche begrenzt. Bei dieser kann es sich insbesondere um einen Grünstreifen handeln, der zwischen zwei Stellplatzreihen liegt. In jeder Stellplatzreihe sind dabei mehrere Stellplätze in Längsrichtung nebeneinandergesetzt, der Grünstreifen liegt zwischen den Reihen (in Querrichtung des Bordsteins).

In bevorzugter Ausgestaltung reicht der Installationsträger bis zu der zweiten Randeinfassung, überbrückt er also die Zwischenfläche. Bevorzugt ist er auch an einem Bordstein der zweiten Randeinfassung befestigt, was weitere Stabilität schaffen kann. In anderen Worten weist der Installationsträger dann also zusätzlich zu dem bisher diskutierten (ersten) Befestigungsabschnitt einen weiteren (zweiten) Befestigungsabschnitt auf, mit dem er an einem Bordstein der zweiten Randeinfassung befestigt wird bzw. ist. In einem mittigen Bereich des Installationsträgers, also zwischen den beiden Randeinfassungen, kann dann ein einziger Installationsbereich oder kann auch jeder Seite ein eigener Installationsbereich zugeordnet sein.

Gemäß einer bevorzugten Ausführungsform weist der Installationsträger ein Einstellmittel auf, mit dem sich seine in Querrichtung genommene Weite einstellen lässt. Es kann also insbesondere vor der Befestigung an beiden Randeinfassungen der Abstand zwischen den beiden Befestigungsabschnitten eingestellt und der Installationsträger so an die Größe der Zwischenfläche angepasst werden. Das Einstellmittel kann bspw. in Form einer Teilung vorgesehen sein, wobei ein Teil mit einem Langloch versehen sein und dementsprechend der Führung des anderen Teils dienen kann. Alternativ kann zur Verbindung der Teile auf unterschiedlichen Positionen aber bspw. auch ein Lochraster vorgesehen sein, oder es kann das eine Teil schienenartig am anderen in Querrichtung verstellbar geführt sein, wobei die Festlegung der Weite in Querrichtung auch erst durch die Befestigung an den Randeinfassungen erfolgen kann.

Die Erfindung betrifft auch ein Ladesystem mit einem vorliegend offenbarten Ladeinfrastruktursystem, an dessen Installationsträger ein Lademodul montiert ist bzw. an dessen Installationsträgern Lademodule montiert sind. Die Lademodule können bspw. bodennah aufgesetzt oder insbesondere in Form von Ladesäulen montiert sein. Das Lademodul stellt die Schnittstelle zwischen dem zu ladenden Fahrzeug und dem Stromnetz dar, es kann dazu bspw. mit einem Ladekabel und/oder einer Ladebuchse zum Einstecken eines Ladekabels ausgestattet sein, bspw. einem Ladekabel mit Typ-2-Stecker und/oder einer Typ-2-Einbaubuchse. Die maximale Ladeleistung kann bei einigen Kilowatt liegen, bspw. bei mindestens 3, 6 bzw. 9 kW, mit möglichen Obergrenzen bei bspw. 50 kW, 40 kW, 30 kW bzw. 25 kW. Aktuell gängige Werte können bspw. bei 11 kW oder 22 kW liegen.

Auf dem Installationsträger kann bspw. auch ein Rohrstück montiert werden bzw. sein, welches dann das Lademodul trägt. Das Rohrstück kann bspw. auf einen vom Installationsträger nach oben hervorstehenden Stutzen aufgeschoben oder in eine vom Installationsträger gebildete Muffe eingeschoben sein kann. Bevorzugt ist es einstückig mit dem Installationsträger ausgebildet, vorzugsweise damit verschweißt, etwa mit der vorstehend diskutierten Abdeckplatte. Das Rohrstück kann dabei auf die Abdeckplatte aufgesetzt oder solchermaßen ein Stück weit in diese eingeschoben sein, dass ein Abschnitt des Rohrstücks nach unten heraussteht und den vorstehend diskutierten Rohrstutzen bildet.

Auch unabhängig von der Montage/Befestigung im Einzelnen kann sich das Rohrstück bspw. gegenüber einer Oberkante des Bodenaufbaus und/oder einer Oberkante der Abdeckplatte um mindestens 0,8 m, 1 m, 1,2 m bzw. 1,4 m erheben (soll also sein oberes Ende auf einer entsprechenden Mindesthöhe liegen), mit möglichen Obergrenzen bei bspw. höchstens 2,5 m, 2 m bzw. 1,8 m. Das Lademodul wird bzw. ist dann an diesem Rohrstück montiert, bevorzugt kann es sich bei dem Lademodul hierbei um eine Wallbox handeln. Diese ist eigentlich für eine Montage an einer vertikalen Wand ausgelegt, kann also gegenüber einer Ladesäule dementsprechend kostengünstig verfügbar sein. An dem Rohrstück lässt sich die Wallbox bspw. über Spannschellen montieren, im Rohrstück kann die Verkabelung nach unten geführt sein, bspw. über den Installationsträger in den Kabelkanal (soweit vorhanden, siehe vorne).

Das Rohrstück kann bspw. einen Außendurchmesser von höchstens 12 cm, 10 cm bzw. 8 cm haben, mögliche Untergrenzen können bspw. bei mindestens 4 cm, 5 cm bzw. 6 cm liegen. Im Allgemeinen ist "Durchmesser" dabei auf den Mittelwert aus kleinster und größter Erstreckung in einer zur Mittenachse senkrechten Schnittebene zu lesen. Bevorzugt ist ein kreisförmiger Querschnitt und entspricht der Durchmesser dem Kreisdurchmesser. Bevorzugt ist ein Metallrohr, insbesondere Stahlrohr. Die radial genommene Wandstärke kann bspw. bei mindestens 1mm und höchstens 10 mm liegen, mit weiteren Untergrenzen bei 1,5 mm bzw. 1,8 mm und Obergrenzen bei z. B. höchstens 6 mm, 4 mm bzw. 3 mm. Hinsichtlich eines "einfachen" Aufbaus hat das Rohrstück über seine Länge bevorzugt einen konstanten Außendurchmesser.

Die Erfindung betrifft ferner einen Parkplatz mit mehreren Stellplätzen und einem Ladeinfrastruktursystem, insbesondere mit mehreren Installationsträgern und Lademodulen. Ferner betrifft die Erfindung die Verwendung eines Installationsträgers und/oder Lademoduls in einem entsprechenden Ladeinfrastruktursystem bzw. Ladesystem, insbesondere bei einem Parkplatz mit mehreren Stellplätzen.

Das Ladeinfrastruktursystem, das sich auf den in den Boden eingebauten Bordstein richtet, kann auch in Form der folgenden Aspekte zusammengefasst werden:
1. Ladeinfrastruktursystem (1) zum Montieren eines Lademoduls (10) für ein elektrisches Fahrzeug an einem Stellplatz (95), mit
   einem in den Boden (80) eingebauten Bordstein (3) und
   einem Installationsträger (2) zum Montieren des Lademoduls (10),
   wobei der Installationsträger (2) an dem Bordstein (3) befestigt ist.
2. Ladeinfrastruktursystem (1) nach Aspekt 1, bei welchem sich ein Befestigungsabschnitt (2.1) des Installationsträgers (2), über welchen dieser an dem Bordstein (3) befestigt ist, an einer Oberseite (3.3) des Bordsteins (3) und an zumindest einer der in Querrichtung (13) des Bordsteins (3) einander entgegengesetzten Seitenwände (3.1, 3.2) des Bordsteins (3) erstreckt.
3. Ladeinfrastruktursystem (1) nach Aspekt 2, bei welchem der Befestigungsabschnitt (2.1) einen ersten und einen zweiten Schenkel (2.1.1, 2.1.2) aufweist, zwischen welchen Schenkeln (2.1.2, 2.1.2) der Bordstein (3) in der Querrichtung (13) eingefasst ist.
4. Ladeinfrastruktursystem (1) nach einem der vorstehenden Aspekte, bei welchem der Installationsträger (2) mit dem Bordstein (3) verschraubt und/oder -klebt ist.
5. Ladeinfrastruktursystem (1) nach einem der vorstehenden Aspekte, bei welchem ein Montageabschnitt (2.2) des Installationsträgers (2), der zum Montieren des Lademoduls (10) vorgesehen ist, seitlich zum Bordstein (3) versetzt angeordnet ist.
6. Ladeinfrastruktursystem (1) nach Aspekt 5 in Verbindung mit Aspekt 3 oder 4, bei welcher der Installationsträger (2) eine Abdeckplatte (2a) umfasst, die sich als durchgehende Platte in dem Montageabschnitt (2.2) und dem Befestigungsabschnitt (2.1) erstreckt.
7. Ladeinfrastruktursystem (1) nach Aspekt 5 oder 6, bei welchem auf dem Installationsträger (2) ein Rammschutz (20) vorgesehen ist, vorzugsweise ein Poller (21).
8. Ladeinfrastruktursystem (1) nach einem der vorstehenden Aspekte, bei welchem neben dem Bordstein (3) ein Kabelkanal (15) für ein Kabel (50) des Lademoduls (10) installiert ist, wobei ein Abschnitt des Installationsträgers (2) einen Abschnitt des Kabelkanals (15) nach oben abdeckt.
9. Ladeinfrastruktursystem (1) nach Aspekt 8, bei welchem in dem Montageabschnitt (2.2) des Installationsträgers (2) ein Loch (6) vorgesehen ist, durch das ein in dem Kabelkanal (15) verlaufendes Kabel (50) zum Anschließen des Lademoduls (10) nach oben aus dem Kabelkanal (15) herausgeführt werden kann.
10. Ladeinfrastruktursystem (1) nach Aspekt 9, bei welchem der Installationsträger (2) einen unterseitig an den Montageabschnitt (2.2) vorgesehenen Rohrstutzen (2.2.1) aufweist, an den von unten ein im Boden (80) verlegtes Kabelschutzrohr (16) angeschlossen ist, welches den Kabelkanal (15) bildet.
11. Ladeinfrastruktursystem (1) nach einem der Aspekte 1 bis 9, mit einer neben dem Bordstein (3) installierten Kabelrinne (45), die mit einem oberseitigen Deckel (46) verschlossen einen Kabelkanal (15) für ein Kabel (50) des Lademoduls (10) bildet.
12. Ladeinfrastruktursystem (1) nach einem der Aspekte 8 bis 11 mit einem Zugangsschacht (70), der mit dem Kabelkanal (15) verbunden ist.
13. Ladeinfrastruktursystem (1) nach einem der vorstehenden Aspekte, welches einen weiteren Installationsträger (2.2) umfasst, der an einem weiteren Bordstein (3.2) befestigt ist, welcher gemeinsam mit dem ersten Bordstein (3.1) Teil einer Randeinfassung (30) mit einer Vielzahl in Längsrichtung (33) nebeneinander in den Boden (80) eingebauter Bordsteine ist.
14. Ladeinfrastruktursystem (1) nach einem der vorstehenden Aspekte, bei welcher der Bordstein (3) Teil einer ersten Randeinfassung (30) ist, die gemeinsam mit einer zweiten Randeinfassung (32), die in Querrichtung (13) zu der ersten Randeinfassung (30) beabstandet liegt, eine Zwischenfläche (60) begrenzt, wobei der Installationsträger (2) in der Querrichtung (13) bis zu der zweiten Randeinfassung (32) reicht.
15. Ladeinfrastruktursystem (1) nach Aspekt 14, bei welcher der Installationsträger (2) auch an einem Bordstein (103) der zweiten Randeinfassung (32) befestigt ist.
16. Ladeinfrastruktursystem (1) nach Aspekt 14 oder 15, bei welchem der Installationsträger (2) ein Einstellmittel zum Einstellen einer in Querrichtung (13) genommenen Weite des Installationsträgers (2) aufweist.
17. Ladesystem (100) für elektrische Fahrzeuge, mit einem Ladeinfrastruktursystem (1) nach einem der vorstehenden Aspekte und einem Lademodul (10), das an dem Installationsträger (2) montiert ist.
18. Parkplatz (90) mit mehreren Stellplätzen und einem Ladeinfrastruktursystem (1) nach einem der Aspekte 13 bis 16, das mit mehreren Lademodulen (10) ausgestattet ist, wobei den Stellplätzen jeweils ein Lademodul (10) zugeordnet ist.
19. Verwendung eines Installationsträgers (2) und/oder Lademoduls (10) in einem Ladeinfrastruktursystem (1) nach einem der Aspekte 1 bis 16 oder einem Ladesystem (100) nach Aspekt 17, insbesondere für einen Parkplatz (90).

### Kurze Beschreibung der Zeichnungen

Im Folgenden wird die Erfindung anhand von Ausführungsbeispielen näher erläutert, wobei die einzelnen Merkmale auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine perspektivische Ansicht eines Ladeinfrastruktursystems mit einem erfindungsgemäßen Lademodulunterbau und darin aufgenommenen Leitungen;
- Figur 2a: eine Detailansicht einer formschlüssigen Verbindung zwischen einem Sockel und einem Hüllkörper;
- Figuren 2b und 2c: alternative Ausgestaltungen der formschlüssigen Verbindung zwischen dem Sockel und dem Hüllkörper;
- Figur 3a: eine Seitenansicht des Ladeinfrastruktursystems mit mehreren in Leitungsrichtung hintereinander gelegenen und mit Leitungen verbundenen Lademodulunterbauten;
- Figur 3b: eine Draufsicht des in Figur 3a gezeigten Ladeinfrastruktursystems;
- Figur 4: ein Ladeinfrastruktursystem bzw. Ladesystem mit mehreren Installationsträgern an einer Randeinfassung;
- Figur 5: ein Ladeinfrastruktursystem mit einem gegenüber Figur 1 alternativen Kabelkanal;
- Figur 6: ein Ladeinfrastruktursystem mit einem Installationsträger an zwei Randeinfassungen;
- Figur 7: ein Ladeinfrastruktursystem mit einer im Vergleich zu Figur 6 alternativen Kabelkanalanbindung;
- Figur 8: einen Parkplatz mit mehreren Stellplätzen und einem Ladeinfrastruktursystem bzw. Ladesystem in schematischer Aufsicht.

### Ausführungsbeispiele

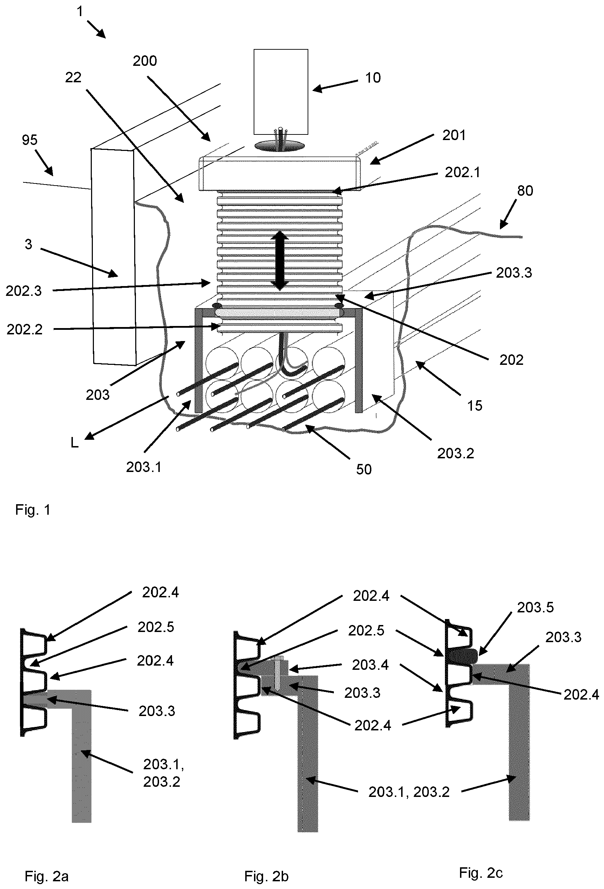

**Figur** 1 zeigt ein Ladeinfrastruktursystem 1, welches mehrere Leitungen 15, 50, einen über den Leitungen 15, 50 angeordneten Sockel 203 sowie einen auf einer den Leitungen 15, 50 abgewandten Oberseite des Sockels 203 angeordneten und mit diesem verbundenen rohrförmigen Hüllkörper 202 umfasst. Die Leitungen 15, 50 sind in einem Graben 22 verlegt und verlaufen entlang einer Leitungsrichtung L. Im gezeigten Beispiel verlaufen sie parallel zu einem Kopfende eines Stellplatzes 95, welcher durch einen im Boden 80 einbetonierten Randstein 3 (dessen Betonsockel in Figur 1 nicht dargestellt ist) begrenzt wird.

Der Sockel 203 besteht aus beidseits der Leitung 15, 50 angeordneten Schenkeln 203.1, 203.2 und mindestens einem quer dazu angeordneten und die Schenkel 203.1, 203.2 verbindenden Verbindabschnitt 203.3, wobei diese jeweils eine Materialstärke von 2 cm aufweisen. Diese bilden gemeinsam einen nach unten und in Leitungsrichtung L beidseitig offenen Hohlraum, in den die Leitungen 15, 50 im montierten Zustand des Ladeinfrastruktursystems 1 aufgenommen sind. Im gezeigten Beispiel sind die Leitungen als Kabelkanäle 15 ausgeführt, welche sich vollständig durch den gebildeten Hohlraum erstrecken. In den Kabelkanälen 15 sind Stromkabel 50 dargestellt, von denen eines oder einige nach oben in den Hüllkörper 202 geleitet werden, andere jedoch (nämlich die meisten) ohne Unterbrechung durch den Sockel 203 verlaufen.

Der Hüllkörper 202 selbst ist als Verbundwellrohr ausgestaltet, weist auf seiner radial nach außen weisenden Außenseite 202.3 demnach Erhebungen 202.4 und Vertiefungen 202.5 auf, welche je Erhebung/Vertiefung 202.4/5 in sich geschlossen sind, und ist auf seiner Innenseite glatt bzw. eben. Der Verbindabschnitt 203.3 weist eine Aussparung zur Aufnahme des Hüllkörpers 202 auf (ersterer ist in Figur 1 zu Illustrationszwecken geschnitten dargestellt); der Hüllkörper 202 ragt also nach unten durch den Verbindabschnitt 203.3 in den vom Sockel 203 gebildeten Hohlraum und wird (wie in Figur 2b im Detail dargestellt) von einem in eine der Vertiefungen 202.5 des Hüllkörpers 202 eingesetzten Halteelement 203.5 bezogen auf eine vertikale Richtung gegen Durchrutschen nach unten gesichert.

Insgesamt bilden der Sockel 203 und der Hüllkörper 202 einen Lademodulunterbau 200, an bzw. auf dem ein Lademodul 10 angeordnet werden kann. Im gezeigten Beispiel ist ferner ein Montageträger 201 zu erkennen, welcher zusätzlich an einem dem unteren Abschnitt 202.2 gegenüberliegenden oberen Abschnitt 202.1 des Hüllkörpers 202 an diesen angeformt und für die Montage des Lademoduls 10 daran vorgesehen ist. Dieser ist aus Polymerbeton hergestellt und bildet eine etwas vergrößerte Grundfläche zur Montage des Lademoduls 10.

Durch eine Anpassung einer vertikalen Position des in die Vertiefung 202.5 des Hüllkörpers 202 eingesetzten Halteelements 203.5, d.h. dessen Anordnung näher an dem oberem/unteren Abschnitt 202.1/2 des Hüllkörpers 202, kann eine vertikale Höhe des Lademodulunterbaus 200 insgesamt (wie in Figur 1 schematisch durch den Pfeil dargestellt) verändert werden.

**Figur 2a, 2b und 2c** zeigen Detailansichten jeweils alternativer Ausführungsformen einer unmittelbaren (Figur 2a) bzw. einer mittelbaren (Figuren 2b und 2c) formschlüssigen Verbindung zwischen dem Verbindabschnitt 203.3 und dem Hüllkörper 202. Wie in Figur 2a zu erkennen, greift in dieser Ausführungsform der Verbindabschnitt 203.3 direkt in die Vertiefung 202.5 ein, ist also unmittelbar formschlüssig mit diesem verbunden. Demgegenüber greift in der in Figur 2b gezeigten Ausführungsform der Verbindabschnitt 203.3 nicht direkt, sondern mittels eines separaten und an diesem bspw. mittels einer Schraube befestigten Eingreifelements 203.4 in die Vertiefung 202.5 ein. Alternativ hierzu kann auch, wie in Figur 2c gezeigt, ein in die Vertiefung 202.5 eingesetztes, bspw. aus EPDM hergestelltes, Halteelement 203.5 vorgesehen sein, welches den Hüllkörper 202 gegen Durchrutschen nach unten sichert.

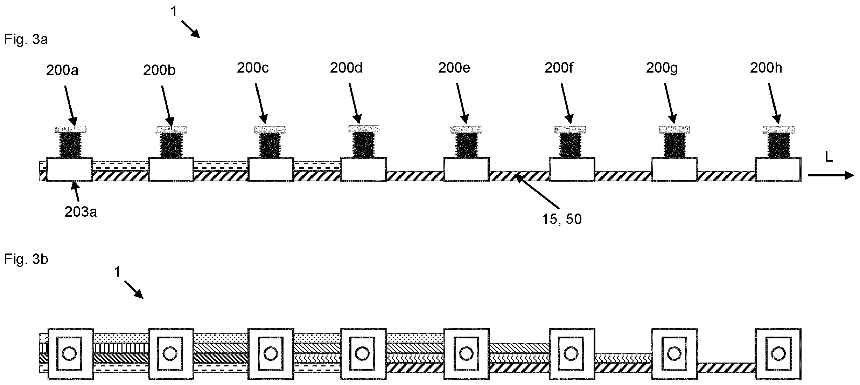

**Figuren 3a und 3b** zeigen einen exemplarischen Aufbau des Ladeinfrastruktursystems 1 in einer Seitenansicht bzw. einer Draufsicht. Wie aus Figur 3a zu erkennen ist, sind insgesamt acht Lademodulunterbauten 200a-200h in Leitungsrichtung L hintereinander angeordnet und über Leitungen 15 miteinander verbunden. In der schematischen Schnittansicht durch den Sockel 203a des ersten Lademodulunterbaus 200a ist zu erkennen, dass in dessen Hohlraum insgesamt acht Leitungen 15 aufgenommen sind, von denen eine zur Versorgung des ersten Lademodulunterbaus 200a in diesem endet, und von denen weitere sieben zur Versorgung der leitungsabwärts gelegenen Lademodulunterbauten 200b-200h ununterbrochen durch diesen verlaufen (siehe diesbezüglich auch die Draufsicht auf das Ladeinfrastruktursystem 1 in Figur 3b).

Im gezeigten Beispiel endet je eine der acht Leitungen 15 in je einem der acht Lademodulunterbauten 200a-200h und jeder dieser Lademodulunterbauten 200a-200h ist über ein separates Kabel 15 (in Figur 3a in der Leitung 15 liegend und daher nicht sichtbar) an einen zentralen Energieübergabepunkt angeschlossen. In Figur 3a ist zudem zu erkennen, dass sowohl mehrere Leitungen nebeneinander (d.h. quer zur Leitungsrichtung L in horizontaler Richtung) als auch übereinander (d.h. in vertikaler Richtung) in dem Hohlraum des Sockels 203 angeordnet sind. Die oberen der Leitungen 15 verlaufen jedoch nur in den ersten bis vierten Lademodulunterbauten 200a-200d; die unteren verlaufen hingegen mindestens bis zum fünften Lademodulunterbau 200e.

**Figur 3b** zeigt eine Draufsicht auf das in Figur 3a dargestellte Ladeinfrastruktursystem 1, wobei in Kombination mit Figur 3a die vorteilhafte Anordnung der Leitungen 15 sowie deren Verlauf im System 1 gut zu erkennen ist. Durch die gezeigte Anordnung kann jeder der Lademodulunterbauten 200a-200h mit dem zentralen Energieübergabepunkt verbunden und hierdurch mit der für ein Schnelladen moderner Elektrofahrzeuge benötigter elektrischer Energie versorgt werden.

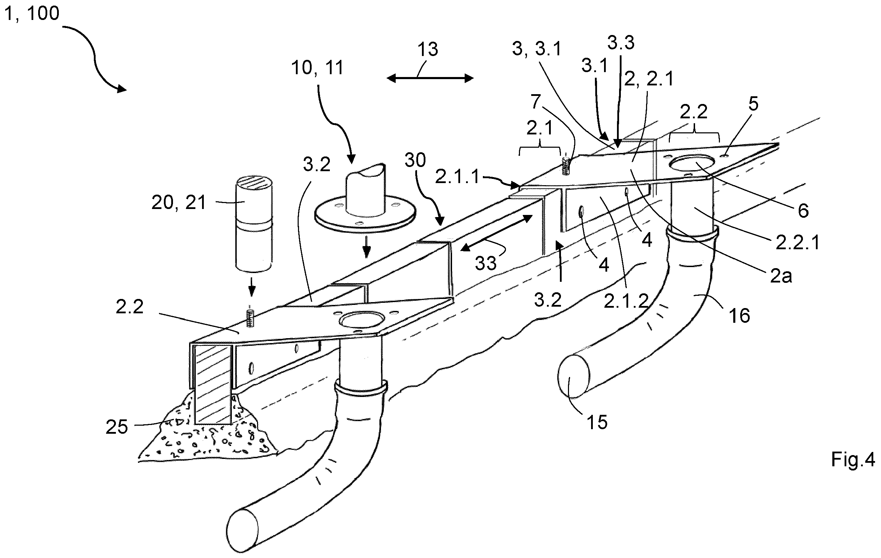

**Figur 4** zeigt ein Ladeinfrastruktursystem 1 bzw. Ladesystem 100, welches einen Installationsträger 2 umfasst, der an einem Bordstein 3 befestigt ist. Dazu ist ein Befestigungsabschnitt 2.1 des Installationsträgers 2 auf den Bordstein 3 aufgesetzt, umgreift er also klammerförmig eine vordere Seitenwand 3.1 und eine in Querrichtung 13 entgegengesetzte hintere Seitenwand 3.2, sowie eine Oberseite 3.3 des Bordsteins 3. Vorliegend ist der Installationsträger 2 an dem Bordstein 3 verschraubt, sind also ein erster (vorderer) Schenkel 2.1.1 und ein zweiter (hinterer) Schenkel 2.1.2 mit den Bordstein 3 durchsetzenden Schrauben 4 am Bordstein 3 verschraubt.

Zusätzlich zu dem Befestigungsabschnitt 2.1 weist der Installationsträger 2 einen Montageabschnitt 2.2 auf, welcher dem Montieren eines in Figur 1 nur teilweise (und an anderer Stelle) dargestellten Lademoduls 10 dient, vorliegend also einer Ladesäule 11 für elektrische Fahrzeuge. In dem Montageabschnitt 2.2 ist der Installationsträger 2 mit Bohrungen 5 versehen, bspw. Gewindelöchern zum Aufschrauben der Ladesäule 11. Diese können vor Ort oder werkseitig in Anpassung an das zu installierende Lademodul 10 eingebracht werden, alternativ ließen sich auch Gewindebolzen vorsehen, etwa aufschweißen.

In dem Montageabschnitt 2.2 ist der Installationsträger 2 ferner mit einem Loch 6 versehen, durch welches ein in einem Kabelkanal 15 verlegtes Elektro- oder auch Datenkabel nach oben geführt werden kann. Vorliegend bildet ein Kabelschutzrohr 16 den Kabelkanal 15, dieses ist von unten an einen am Installationsträger 2 ausgebildeten Rohrstutzen 2.2.1 angeschlossen. Der Installationsträger 2 ist aus Metall vorgesehen, der hintere Schenkel 2.1.2 sowie der Rohrstutzen 2.2.1 sind angeschweißt. Eine Abdeckplatte 2a des Installationsträgers erstreckt sich durchgehend über Befestigungs- und Montageabschnitt 2.1, 2.2 sowie dazwischen.

In dem Befestigungsabschnitt 2.1 ist ein Schraubbolzen 7 aufgeschweißt, über den sich ein Rammschutz 20 befestigen lässt, vorliegend ein Poller 21. Dieser sitzt dann vertikal oberhalb des Bordsteins 3, ist also aufgrund der Verankerung des Bordsteins 3 im Boden stabil gehalten. Ein unterer Abschnitt des Bordsteins 3 wird nämlich von einem Betonsockel 25 eingefasst, der jeweils auch einen unteren Abschnitt der beiden Seitenwände 3.1, 3.2 bedeckt, vergleiche die Darstellung im Schnitt links vorne.

Der Bordstein 3 ist insgesamt Teil einer Randeinfassung 30, die aus einer Vielzahl in einer Längsrichtung 33 aneinandergesetzten Bordsteinen aufgebaut ist. In der vorliegenden Darstellung ist zusätzlich zu dem ersten Installationsträger 2.1 am ersten Bordstein 3.1 an einem weiteren (zweiten) Bordstein 3.2 ein weiterer (zweiter) Installationsträger 2.2 befestigt. Dessen Aufbau und Anschluss sind analog der vorstehenden Schilderung, entlang der Randeinfassung 30 lassen sich so eine große Zahl Installationsträger 2 und damit Lademodule 10 anbringen.

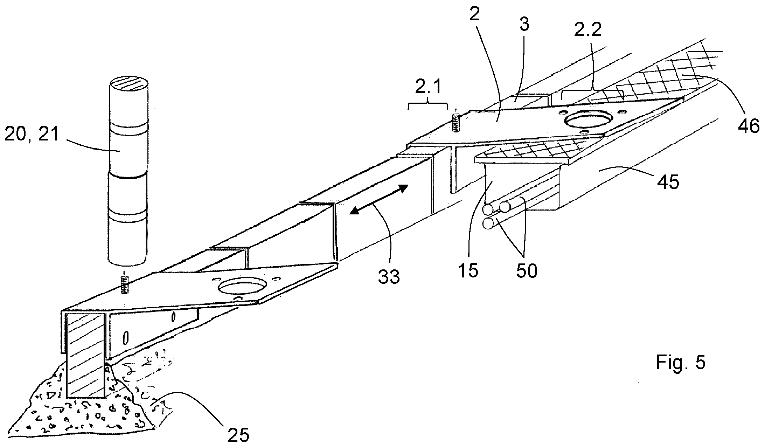

**Figur 5** zeigt ein Ladeinfrastruktursystem 1, das weitgehend jenem gemäß Figur 1 entspricht. Generell bezeichnen im Rahmen der vorliegenden Offenbarung die gleichen Bezugszeichen gleiche Teile bzw. Teile mit gleicher Funktion und wird insofern immer auch auf die Beschreibung der jeweilig anderen Figuren verwiesen. Die Variante gemäß Figur 2 unterscheidet sich in der Art des Kabelkanals 15. Dieser wird in Figur 2 von einer Kabelrinne 45 gebildet. Diese ist im Schnitt U-förmig, die Kabel 50 lassen sich von oben einlegen. Dies kann gegenüber einem Hindurchziehen bzw. speziell bei einer großen Kabelzahl die Verlegung vereinfachen. Über die Rinne 45 können dann mehrere Installationsträger 2 bzw. Lademodule angebunden werden.

Nach oben ist bzw. wird die Rinne 45 mit einem bzw. mehreren in Längsrichtung 33 aneinandergesetzten Deckeln 46 verschlossen, für eine Nachbelegung o. ä. lässt sich die Rinne 45 damit leicht öffnen. Der Installationsträger 2, insbesondere der Montageabschnitt 2.2 deckt die Rinne 45 nach oben ab, er liegt auf dieser auf und dient damit auch als Niederhalter. Dabei kann der Installationsträger 2 auf einem Deckel 46 aufsitzen und kann dieser im Bereich des Lochs 6 aufgebohrt werden; alternativ kann der Installationsträger 2 zwischen 2 Deckeln 46 platziert sein.

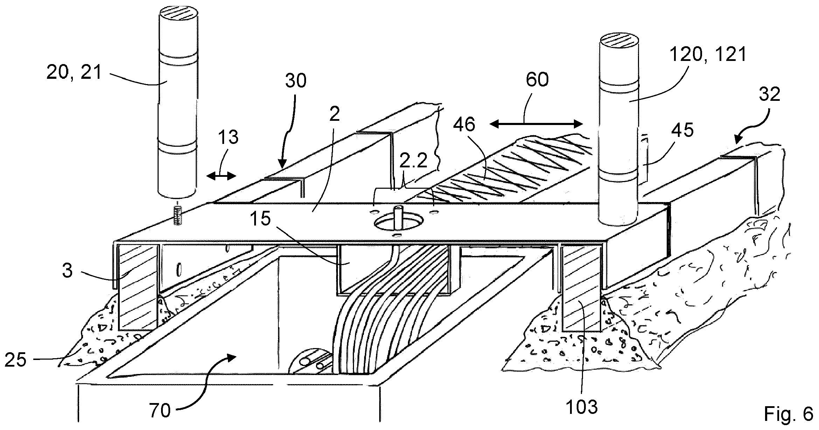

Bei der Variante gemäß **Figur 6** begrenzt die (erste) Randeinfassung 30 gemeinsam mit einer zweiten Randeinfassung 32, die ebenfalls aus in Längsrichtung 33 aneinandergesetzten Bordsteinen aufgebaut ist, in der Querrichtung 13 eine Zwischenfläche 60, insbesondere einen Grünstreifen. Dieser liegt zwischen zwei Stellplatzreihen, vgl. auch Figur 5 zur Illustration. Der Installationsträger 2 erstreckt sich bis zur zweiten Randeinfassung 32, auch dort ist er an einem Bordstein 103 befestigt. Der Montageabschnitt 2.2 liegt mittig zwischen den Randeinfassungen 30,32, das dort installierte Lademodul (nicht gezeigt) versorgt dann also beidseitig die Stellplätze. Auch bei der zweiten Randeinfassung 32 ist an den Installationsträger 2 ein Rammschutz 120, vorliegend Poller 121 montiert.

Der Kabelkanal 15 mündet in einen Zugangsschacht 70, der betoniert oder auch als Kunststoffschacht in den Boden eingebaut sein kann. Über einen oder mehrere solche Schächte lässt sich das Ladeinfrastruktursystem insgesamt anschließen, können also bspw. auch mehrere Kabelkanäle 15 angebunden sein.

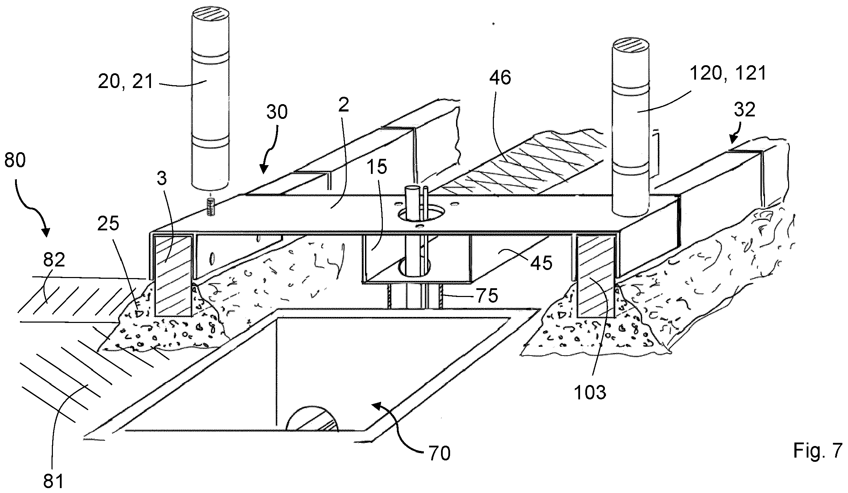

Die Variante gemäß **Figur 7** unterscheidet sich von jener aus Figur 6 lediglich dahingehend, dass die Kabelrinne 45 nicht direkt in den Zugangsschacht 70 mündet, sondern über ein Wellrohr 75 an diesen angebunden ist. Das Wellrohr 75 ist von unten an die Kabelrinne 45 angeschlossen und mündet seitlich in den Zugangsschacht 70.

Figur 7 illustriert ferner einige Bestandteile des Bodens 80, nämlich zusätzlich zu dem Betonsockel 25 auch ein Schotterbett 81 sowie stellplatzseitig eine Asphaltschicht 82. Im Bereich des Grünstreifens kann bis zu einer vergleichbaren Höhe mit Schotter 81 aufgefüllt sein, darüber kann bspw. Erde für eine Begrünung den Bereich zwischen den Randeinfassungen 30, 32 auffüllen.

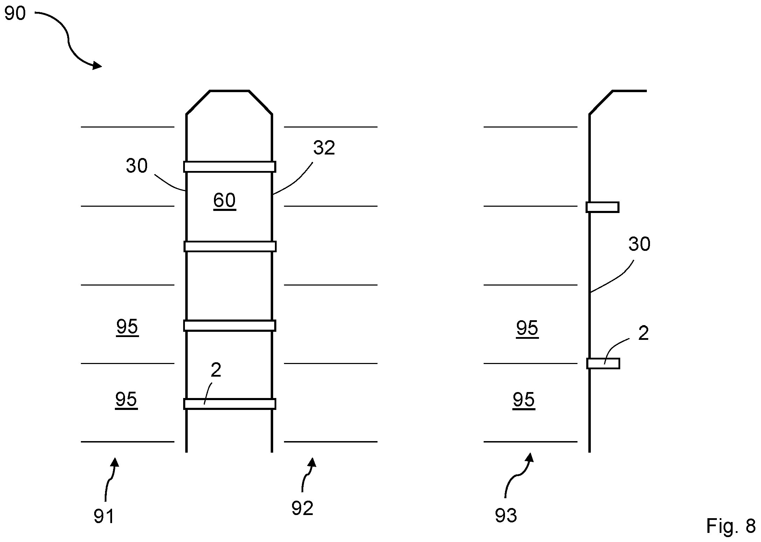

**Figur 8** illustriert in schematischer Ansicht einen Parkplatz 90 mit mehreren Stellplatzreihen 91-93, die jeweils mehrere Stellplätze 95 umfassen. Diese werden von Randeinfassungen 30, 32 begrenzt, wobei zwischen den Stellplatzreihen 91, 92 ein Grünstreifen 60 angeordnet ist und sich die Stellplätze 95 der Stellplatzreihen 91, 92 jeweils ein Lademodul teilen (vgl. die schematisch gezeigten Installationsträger 2 sowie die Schilderung zu den Figuren 6 und 7). Die Stellplatzreihe 93 liegt hingegen am Rand des Parkplatzes 90, dort kann der Installationsträger 2 bspw. jeweils in Längsrichtung 33 zwischen zwei Stellplätzen 95 angeordnet sein.

## Patentansprüche

1. Ladeinfrastruktursystem (1) zum Montieren eines Lademoduls (10) für ein elektrisches Fahrzeug, umfassend
eine Leitung (15, 50), welche in einer Leitungsrichtung (L) in einem Boden verläuft,
einen darüber angeordneten Sockel (203), welcher beidseits der Leitung (15, 50) jeweils einen Schenkel (203.1, 203.2) und einen quer dazu angeordneten und die Schenkel (203.1, 203.2) verbindenden Verbindabschnitt (203.3) umfasst, welche einen nach unten und in Leitungsrichtung (L) beidseitig offenen Hohlraum bilden, in den die Leitung (15, 50) im montierten Zustand des Ladeinfrastruktursystems (1) aufgenommen ist, und
einen auf einer der Leitung (15, 50) abgewandten Oberseite des Sockels (203) angeordneten und mit diesem verbundenen rohrförmigen Hüllkörper (202),
wobei die Schenkel (203.1, 203.2) und der quer dazu angeordnete Verbindabschnitt (203.3) die Leitung (15, 50) an einer den Hohlraum bildenden Unterseite des Sockels (203) in Leitungsrichtung (L) betrachtet U-förmig umschließen.

2. Ladeinfrastruktursystem (1) nach Anspruch 1, bei welchem die Leitung (15, 50) seitlich zwischen den Schenkeln (203.1, 203.2) und oben unterhalb des Verbindabschnitts (203.3) vollständig aufgenommen, an einer dem Verbindabschnitt (203.3) gegenüberliegenden Unterseite der Leitung (15, 50) jedoch frei ist.

3. Ladeinfrastruktursystem (1) nach Anspruch 1 oder 2, bei welchem die Schenkel (203.1, 203.2) und/oder der Verbindabschnitt (203.3) plattenförmig ausgebildet sind/ist.

4. Ladeinfrastruktursystem (1) nach einem der vorstehenden Ansprüche, bei welchem die Schenkel (203.1, 203.2) und/oder der Verbindabschnitt (203.3) aus einem Sockelmaterial mit Kunststoff hergestellt sind/ist.

5. Ladeinfrastruktursystem (1) nach einem der vorstehenden Ansprüche, bei welchem in dem Hohlraum mindestens zwei nebeneinander und in diesem parallel zueinander verlaufende Leitungen (15, 50) aufgenommen sind.

6. Ladeinfrastruktursystem (1) nach einem der vorstehenden Ansprüche, bei welchem eine vertikale Höhe eines aus dem Sockel (203) und dem rohrförmigen Hüllkörper (202) gebildeten Lademodulunterbaus (200) einstellbar ist.

7. Ladeinfrastruktursystem (1) nach einem der vorstehenden Ansprüche, bei welchem der Hüllkörper (202) im Bereich eines unteren Abschnitts (202.2) des Hüllkörpers (202) formschlüssig mit dem Sockel (203) verbunden ist.

8. Ladeinfrastruktursystem (1) nach einem der vorstehenden Ansprüche, bei welchem der Hüllkörper (202) an einer Außenmantelfläche (202.3) eine Mehrzahl jeweils umlaufender Erhebungen (202.4) aufweist.

9. Ladeinfrastruktursystem (1) nach Anspruch 8, bei welchem der Hüllkörper (202) in eine Aussparung des Verbindabschnitts (203.3) eingesetzt ist und der Verbindabschnitt (203.3) in eine zwischen zwei benachbarten Erhebungen (202.4) gelegenen Vertiefung (202.5) formschlüssig eingreift.

10. Ladeinfrastruktursystem (1) nach Anspruch 8, bei welchem der Verbindabschnitt (203.3) über ein separat von diesem gebildetes und mit diesem verbundenes Eingreifelement (203.4) formschlüssig in die Vertiefung (202.5) eingreift.

11. Ladeinfrastruktursystem (1) nach Anspruch 8, bei welchem der Hüllkörper (202) in eine Aussparung des Verbindabschnitts (203.3) eingesetzt und durch ein in eine zwischen zwei benachbarten Erhebungen (202.4) gelegene Vertiefung (202.5) eingesetztes Halteelement (203.5) bezogen auf eine vertikale Richtung gegen Durchrutschen nach unten gesichert ist.

12. Ladeinfrastruktursystem (1) nach einem der vorstehenden Ansprüche, bei welchem der Hüllkörper (202) an einem oberen Abschnitt (202.1) einen monolithisch mit diesem gebildeten Flansch aufweist, welcher in Bezug auf eine Hochachse des Hüllkörpers (202) radial nach außen und/oder innen über diesen herausragt und zum Montieren des Lademoduls (10) vorgesehen ist.

13. Ladeinfrastruktursystem (1) nach einem der Ansprüche 1 bis 11, ferner umfassend einen Montageträger (201), welcher an einem oberen Abschnitt (202.1) des Hüllkörpers (202) angeordnet, bevorzugt in welchen der obere Abschnitt (202.1) des Hüllkörpers (202) eingeformt ist, wobei der separat ausgebildete Montageträger (201) in Bezug auf eine Hochachse des Hüllkörpers (202) radial nach außen und/oder innen über diesen herausragt und zum Montieren des Lademoduls (10) vorgesehen ist.

14. Verfahren zur Montage eines Lademoduls (10) für ein elektrisches Fahrzeug, wobei das Verfahren umfasst:
Verlegen einer Leitung (15, 50), welche in einer Leitungsrichtung (L) verläuft;
Anordnen eines Sockels (203), welcher einen nach unten und in Leitungsrichtung (L) beidseitig offenen Hohlraum bildet, derart oberhalb der Leitung (15, 50), dass die Leitung (15, 50) in den Hohlraum aufgenommen wird;
Anordnen und Verbinden eines Hüllkörpers (202) auf bzw. mit dem Sockel (203) derart, dass der Hüllkörper (202) bezogen auf eine vertikale Richtung durch den Sockel (203) gestützt wird; und
Montieren eines Lademoduls (10) an einem bevorzugt als Flansch ausgebildeten oberen Abschnitt (202.1) des Hüllkörpers (202).

15. Verwendung eines Sockels (203) und/oder Hüllkörpers (202) in einem Ladeinfrastruktursystem (1) nach einem der Ansprüche 1 bis 13, insbesondere an einem Parkplatz (95).
